(19) Europäisches Patentamt
European Patent Office
Office européen des brevets

(11) **EP 4 721 576 A1**

(12) **EUROPEAN PATENT APPLICATION**

(43) Date of publication:
08.04.2026 Bulletin 2026/15

(51) International Patent Classification (IPC):
A23G 9/32 (2006.01)    A23G 9/34 (2006.01)
A23G 9/38 (2006.01)    A23G 9/42 (2006.01)

(21) Application number: 24203949.3

(22) Date of filing: 01.10.2024

(52) Cooperative Patent Classification (CPC):
(C-Sets available)
A23G 9/327; A23G 9/34; A23G 9/38; A23G 9/42

(Cont.)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(71) Applicant: MAGNUM IP HOLDINGS B.V.
1017 BM Amsterdam (NL)

(72) Inventor: The designation of the inventor has not
yet been filed

(74) Representative: Potter Clarkson
Chapel Quarter
Mount Street
Nottingham NG1 6HQ (GB)

(54) **PLANT-BASED FROZEN CONFECTION**

(57) The present invention relates to a process for preparing a plant-based frozen confection premix comprising fat, sugars, stabilizer, and plant protein, wherein the premix comprises fat in an amount of greater than 3 wt%, and the process comprises the sequential steps of: (a) combining sugars, stabilizer and plant protein in water to prepare an aqueous dispersion; (b) optionally adjusting the pH of the aqueous dispersion to ensure that the pH is in the range of 6.5 to 8.5; (c) combining the aqueous dispersion having a pH in the range of 6.5 to 8.5 with the fat to provide a frozen confection premix; (d) reducing the pH of the frozen confection premix to a pH in the range of 3 to 6; and (e) optionally pasteurising the frozen confection premix of step (d).

EP 4 721 576 A1

(52) Cooperative Patent Classification (CPC): (Cont.)

C-Sets
A23V 2200/00, A23V 2200/222, A23V 2250/548,
A23V 2250/628, A23V 2250/507

## Description

### Field of the invention

The invention relates to plant-based frozen confections.

### Background of the invention

Plant-based foods are a growing consumer trend, which is thought to be driven by increasing health and environmental consciousness. As a result, there is currently an increased consumer demand for frozen confections which are not based on dairy ingredients, and instead use plant-based alternatives.

Frozen confections where some or all of the dairy ingredients have been replaced with plant-based ingredients are commercially available. For instance, pulse protein (such as soy protein or pea protein) is becoming more widely used in frozen confections. The molecular structures of plant proteins are very different from those of dairy proteins, and a number of technical challenges may need to be overcome when formulating plant-based frozen confections. One such challenge relates to texture and mouthfeel, since milk proteins stabilise the partial coalescence of the fat phase and maintain small air bubbles in frozen confections.

Together with protein, fat is also responsible for the characteristic microstructure (and hence the texture) associated with ice cream. Fat helps to stabilise the air bubbles, contributes to the creamy texture, provides desirable melting properties (by slowing down rate at which melting occurs), and is a good carrier for certain flavour compounds. Therefore, producing an ice cream product with varied amount of protein and fat is a challenge in particularly when the protein is a plant protein.

Therefore, there remains a need for improved formulations for plant-based frozen confections which overcome one or more of the drawbacks associated with the current formulations.

### Summary of the invention

Plant-based frozen confections are prepared by freezing a premix. The present inventors have discovered that the microstructure of these plant-based frozen confections can be influenced by controlling the point at which pH changes occur when preparing the premix.

In a first aspect, the present invention relates to a process for preparing a plant-based frozen confection premix comprising fat, sugars, stabilizer, and plant protein, wherein the premix comprises fat in an amount of greater than 3 wt%, and wherein the process comprises the sequential steps of:

(a) combining sugars, stabilizer, and plant protein in water to prepare an aqueous dispersion, wherein the plant protein comprises pulse protein;
(b) optionally adjusting the pH of the aqueous dispersion to ensure that the pH is in the range of 6.5 to 8.5;
(c) combining the aqueous dispersion having a pH in the range of 6.5 to 8.5 with the fat to provide a frozen confection premix wherein step (c) comprises homogenisation;
(d) reducing the pH of the frozen confection premix to a pH in the range of 3 to 6; and
(e) optionally pasteurising the frozen confection premix of step (d).

Without wishing to be bound by theory, the inventors believe that this process produces aggregated swollen protein particles which help to structure the frozen confection. This means that it is possible to produce a frozen confection with acceptable microstructure and resilience even when the amounts of fat and protein are varied.

In a second aspect, the invention relates to a plant-based frozen confection premix comprising:

- fat in an amount of greater than 3 wt%;
- sugars in an amount of 15 to 45 wt%;
- stabilizer in an amount of 0.01 to 1 wt%; and
- plant protein in an amount of 1 to 12 wt%, wherein the plant protein comprises pulse protein;

wherein the premix comprises plant protein particles having a D[3,2] particle size of 6 to 13 $\mu$m.

In further aspects, the invention relates to a process for preparing a plant-based frozen confection wherein the plant-based frozen confection premix prepared by the process of the first aspect is frozen and preferably aerated to provide the plant-based frozen confection, and also to a plant-based frozen confection having the same composition as the premix of the second aspect.

**Detailed description of the invention**

The present invention relates to a process for preparing a plant-based frozen confection premix comprising fat, sugars, stabilizer, and plant protein. As used herein, the term "plant-based frozen confection premix" refers to a premix which can be frozen to produce a plant-based frozen confection. The premix comprises fat in an amount of greater than 3 wt%. The process comprises the sequential steps of:

> (a) combining sugars, stabilizer, and plant protein in water to prepare an aqueous dispersion;
> (b) optionally adjusting the pH of the aqueous dispersion to ensure that the pH in the range of 6.5 to 8.5;
> (c) combining the aqueous dispersion having a pH in the range of 6.5 to 8.5 with the fat to provide a frozen confection premix;
> (d) reducing the pH of the frozen confection premix to a pH in the range of 3 to 6; and
> (e) optionally pasteurising the frozen confection premix of step (d).

In a first step of the process, sugars, stabilizer, and plant protein are combined in water to prepare an aqueous dispersion. The plant protein comprises pulse protein. In order to aid dispersion, it is preferred that the ingredients (sugar, stabilizer, plant protein) and water are combined and mixed with heating, for example at 60°C to 80°C, preferably 65°C to 75°C. This can conveniently be achieved using a mix tank, preferably a mix tank comprising stirring means.

In a second step of the process, the pH of the aqueous dispersion is optionally adjusted to ensure that that the pH is in the range of 6.5 to 8.5. The pH of the dispersion may fall within this range without needing to be adjusted. Alternatively, the pH can be adjusted to fall within the required range via the addition of an alkali such as potassium hydroxide to the aqueous dispersion. For example, the use of a 25 wt% solution of potassium hydroxide allows the pH to be adjusted without significantly changing the volume of the aqueous dispersion. It is preferred that the pH is adjusted to a pH in the range of 7 to 8 in step (b) of the process.

In a third step of the process, the aqueous dispersion having a pH range in the range of 6.5 to 8.5 (and preferably 7 to 8) is combined with fat to provide a frozen confection premix. This step comprises homogenisation.

Following the third step of the process, the fat will typically be present in the form of very small dispersed droplets. The fat droplets preferably have a D[3,2] particle size of less than 1 $\mu$m, more preferably less than 0.85 $\mu$m, less than 0.8 $\mu$m, less than 0.75 $\mu$m, or even less than 0.7 $\mu$m. The D[3,2] fat droplet size is preferably at least 0.4 $\mu$m, or even at least 0.5 $\mu$m. Fat droplet size distribution can be measured using a Malvern Mastersizer 3000 equipped with a wet dispersion unit. Premix samples are diluted 10-fold in a solution of sodium dodecyl sulphate (SDS) and urea (6.6 M urea, 0.1% SDS, pH 7), and subjected to 1 minute of full power sonication within the dispersion unit prior to the start of particle size measurement. This treatment ensures that any weakly bound or flocculated fat droplets are separated into individual fat droplets to give a more accurate representation of the fat droplet particle size.

In a fourth step of the process, the pH of the frozen confection premix of step (c) is reduced to a pH in the range of 3 to 6, preferably to a pH in the range of 3.5 to 5.5. This can be achieved via the addition of an edible acid such as citric acid, lactic acid, malic acid, or tartaric acid to the frozen confection premix of step (c).

The change in pH between that of the aqueous dispersion of step (b) and that of the frozen confection premix of step (d) can be expressed by the following equation:

$$\Delta pH = pH \ of \ aqueous \ dispersion - pH \ of \ frozen \ confection \ premix$$

$\Delta$pH is preferably at least 1 , more preferably at least 2.4, at least 2.8, or even at least 3.2. $\Delta$pH is preferably no more than 5, more preferably no more than 4.6, or even no more than 4.2.

$\Delta$pH is preferably in between 1 to 5, more preferably in between 1 to 4.6 and most preferably in between 1 to 3.5.

Following step (d) of the process, the protein will typically be present in the form of swollen particles which form part of a protein-fat network. Such a protein-fat network comprises closely packed protein particles forming a network structure with small fat droplets dispersed therein. These protein particles preferably have a D[3,2] particle size of 6 $\mu$m to 13 $\mu$m, more preferably 7 $\mu$m to 12 $\mu$m, or even 8 $\mu$m to 11 $\mu$m. The particle size distribution is conveniently measured without preparing the sample in SDS/Urea using a Malvern Mastersizer 3000 equipped with a wet dispersion unit to determine surface weighted mean D[3,2] particle size.

In an optional fifth step of the process, the frozen confection premix is pasteurised. A typical pasteurization regime is a temperature of >80°C and a holding time of around 30 s. Following pasteurisation, the premix is preferably cooled, and may undergo ageing (e.g, by being held in an ageing tank at 0°C to 4°C for 2 to 24 hours, or even up to 72 hours) before being frozen.

The present invention also relates to a plant-based frozen confection premix comprising:

• fat in an amount of greater than 3 wt%;

- sugars in an amount of 15 to 45 wt%;
- stabilizer in an amount of 0.01 to 1 wt%; and
- plant protein in an amount of 1 to 12 wt%, wherein the plant protein comprises pulse protein;

wherein the premix comprises plant protein particles having a D[3,2] particle size of 6 to 13 $\mu$m.

The plant-based frozen confection premix is obtainable by the process described above.

As used herein the term plant-based means that the frozen confection premix (and the resulting frozen confection) is formulated primarily from plant-derived ingredients. Nevertheless, it will be appreciated that the plant-based frozen confection premix (and the resulting plant-based frozen confection) may be fortified with vitamins and/or minerals or flavoured with ingredients (such as honey) which are not strictly speaking derived from plants. Preferably at least 98% by dry weight of the ingredients are derived from plants, more preferably at least 99%, at least 99.5%, at least 99.9%, most preferably 100% by dry weight of the ingredients are derived from plants. In particular, it is preferred that the frozen confection premix (and the resulting frozen confection) is essentially free of animal-derived ingredients, and thus comprises animal-derived ingredients in an amount of less than 0.1 wt%, preferably less than 0.05 wt%, more preferably less than 0.01 wt%.

The frozen confection premix comprises fat in an amount of greater than 3 wt%. Without wishing to be bound by theory, the inventors believe that structuring can be provided by the protein, irrespective of the fat level in the premix. The frozen confection premix comprises fat in an amount greater than 3 wt%, and preferably greater than 4 wt%, or even more preferably greater than 5 wt%. The fat content of the premix is preferably from 3.1 to 15 wt%, more preferably 4 to 15 wt%, further more preferably 5 to 12 wt% and most preferably 5 to 10 wt%. The fat is preferably vegetable fat (such as coconut oil, palm oil, palm kernel oil, or a mixture thereof). It is particularly preferred that the fat is palm oil, coconut oil, or a mixture thereof.

The frozen confection premix comprises sugars in an amount of 15 to 45 wt%. Sugars are used in almost all types of frozen confection and have two major functions: delivering sweetness and controlling the amount of ice. As used herein the term "sugars" includes monosaccharides, disaccharides and oligosaccharides (which are formed from 3 to 10 monosaccharide units). Monosaccharides include glucose, fructose, galactose and mannose. Disaccharides include sucrose, lactose and trehalose. Oligosaccharides include raffinose. The term "sugars" does not include polysaccharides, which comprise >10 monosaccharides. Some ingredients commonly included in frozen confections may contribute to the amount of sugars. An example is corn syrup (sometimes called glucose syrup) - which is a mixture of monosaccharides, disaccharides and oligosaccharides.

High concentrations of sugars may contribute unwanted sweetness and or calories to the frozen confection. Therefore, the frozen confection premix comprises sugars in an amount of no more than 45 wt%, preferably no more than 40 wt%, no more than 30 wt%, or no more than 25 wt%. Conversely, low concentrations of sugars may be inappropriate if the frozen confection is a scoopable product, since a low concentration of sugars tend to result in frozen confections with a high ice content. Therefore, the frozen confection premix comprises sugars in an amount of at least 15 wt%, preferably at least 18 wt%, or at least 20 wt%.

The frozen confection premix comprises stabilizer in an amount of 0.01 to 1 wt%, preferably in an amount of 0.1 wt% to 1 wt%, 0.2 wt% to 0.8 wt%, or 0.2 wt% to 0.6 wt%. The stabilizer is preferably selected from the group consisting of locust bean gum, xanthan gum, guar gum, carrageenan, tara gum, pectin, and mixtures thereof (for example, a mixture of locust bean gum and guar gum).

The frozen confection premix comprises plant protein in an amount of 1 to 12 wt%. Since the inventors believe that the protein is involved in structuring the frozen confection produced from the premix, the frozen confection premix comprises the plant protein in an amount of at least 1 wt%, preferably at least 1.5 wt%, or at least 2 wt%. However, since high levels of plant protein are associated with flavour off-notes, the frozen confection premix comprises the plant protein in an amount of 12 wt% or less, preferably 8 wt% or less, 6 wt% or less, or even 5 wt% or less.

The plant protein comprises pulse protein. The plant protein may additionally comprise cereal protein as well as pulse protein. The pulse protein is preferably selected from: bean protein, carob protein, lentil protein, lupin protein, pea protein, soy protein, and mixtures thereof. For example, the pulse protein may comprise pea protein, soy protein, fava bean protein, carob protein, or a mixture thereof. It is particularly preferred that the pulse protein is pea protein or soy protein. Where the plant protein additionally comprises cereal protein, the cereal protein is preferably selected from oat protein, wheat protein, rye protein, barley protein, rice protein, buckwheat protein, millet protein, and mixtures thereof.

The frozen confection premix comprises plant protein particles having a D[3,2] particle size of 6 to 13 $\mu$m, preferably 7 to 12 $\mu$m, or even 8 to 11 $\mu$m. As set out above, the particle size distribution is conveniently measured without preparing the sample in SDS/Urea using a Malvern Mastersizer 3000 equipped with a wet dispersion unit to determine surface weighted mean D[3,2] particle size. The protein particles are believed to form part of a protein-fat network comprising closely packed protein particles forming a network structure with small fat droplets dispersed therein.

The plant protein particles preferably have a water holding capacity of 5 to 16 g water per g of protein, more preferably 11 to 15 g water per g of protein, or even 12 to 14 g water per g of protein. Water holding capacity (WHC) is the maximum amount of water that 1 g of material will imbibe and retain under low-speed centrifugation. WHC is measured according to Method 56-30.01 of AACC International "Approved Methods of Analysis" (11th Edition).

The frozen confection premix preferably has a viscosity of 0.3 Pa.s to 0.85 Pa.s, more preferably 0.35 Pa.s to 0.8 Pa.s, or even 0.4 Pa.s to 0.75 Pa.s. Premix viscosity is measured at 5°C and 50 s$^{-1}$. For example, using an Anton Paar Physica MCR501 rheometer.

Whilst the frozen confection premix may optionally comprise an emulsifier or a mixture of emulsifiers (such as mono-diglycerides and the like), this is not essential, and the frozen confections produced from the premix have good structural and textural properties even without the addition of an emulsifier. Thus, the frozen confection premix preferably does not comprise emulsifier.

The frozen confection premix may optionally comprise additional ingredients such as colours, flavours, fruit juices and/or fruit concentrates.

The invention also relates to a process for preparing a plant-based frozen confection comprising fat, sugars, stabilizer, and plant protein. The plant-based frozen confection comprises fat in an amount of greater than 3 wt%. The process comprises the sequential steps of:

(a) combining sugars, stabilizer, and plant protein in water to prepare an aqueous dispersion, wherein the plant protein comprises pulse protein;
(b) optionally adjusting the pH of the aqueous dispersion to ensure that the pH in the range of 6.5 to 8.5;
(c) combining the aqueous dispersion having a pH in the range of 6.5 to 8.5 with the fat to provide a frozen confection premix wherein step (c) comprises homogenisation;
(d) reducing the pH of the frozen confection premix to a pH in the range of 3 to 6; and
(e) optionally pasteurising the frozen confection premix of step (d); and
(f) freezing and optionally aerating the frozen confection premix of step (e) or step (f) to provide the plant-based frozen confection.

Steps (a) to (e) of this process produce a plant-based frozen confection premix, and are described in detail above. A sixth step comprises freezing the frozen confection premix to provide the plant-based frozen confection. The premix is preferably aerated during freezing, for example using a scraped surface heat exchanger.

Finally, the invention relates to a plant-based frozen confection comprising:

- fat in an amount of greater than 3 wt%;
- sugars in an amount of 15 to 45 wt%;
- stabilizer in an amount of 0.01 to 1 wt%; and
- plant protein in an amount of 1 to 12 wt%, wherein the plant protein comprises pulse protein;

wherein the frozen confection comprises plant protein particles having a D[3,2] particle size of 6 to 13 $\mu$m.

The plant-based frozen confection is obtainable by the process described above.

The frozen confection comprises sugars in an amount of 15 to 45 wt%. High concentrations of sugars may contribute unwanted sweetness and or calories to the frozen confection. Therefore, the frozen confection comprises sugars in an amount of no more than 45 wt%, preferably no more than 40 wt%, no more than 30 wt%, or no more than 25 wt%. Conversely, low concentrations of sugars may be inappropriate if the frozen confection is a scoopable product, since a low concentration of sugars tend to result in frozen confections with a high ice content. Therefore, the frozen confection comprises sugars in an amount of at least 15 wt%, preferably at least 18 wt%, or at least 20 wt%.

The frozen confection comprises stabilizer in an amount of 0.01 to 1 wt%, preferably in an amount of 0.1 wt% to 1 wt%, 0.2 wt% to 0.8 wt%, or 0.2 wt% to 0.6 wt%. The stabilizer is preferably selected from the group consisting of locust bean gum, xanthan gum, guar gum, carrageenan, tara gum, pectin, and mixtures thereof (for example, a mixture of locust bean gum and guar gum).

The frozen confection comprises plant protein in an amount of 1 to 12 wt%. Since the inventors believe that the protein is involved in structuring the frozen confection, the frozen confection comprises the plant protein in an amount of at least 1 wt%, preferably at least 1.5 wt%, or at least 2 wt%. However, since high levels of plant protein are associated with flavour off-notes, the frozen confection comprises the plant protein in an amount of 12 wt% or less, preferably 8 wt% or less, 6 wt% or less, or even 5 wt% or less. It will be clear to the skilled person that the frozen confection premix and the frozen confection can comprise the same plant protein. Details of suitable plant proteins are given above.

The frozen confection comprises plant protein particles having a D[3,2] particle size of 6 to 13 $\mu$m, preferably 7 to 12 $\mu$m, or even 8 to 11 $\mu$m. A method for measuring the D[3,2] particle size is described above. The plant protein particles preferably have a water holding capacity of 5 to 16 g water per g of protein, more preferably 11 to 15 g water per g of protein, or even 12 to 14 g water per g of protein. A method for measuring the water holding capacity is described above.

As explained above, the frozen confections produced from the premix have good structural and textural properties even without the addition of an emulsifier. Thus, the frozen confection preferably does not comprise emulsifier.

The frozen confection may optionally comprise additional ingredients such as colours, flavours, fruit juices and/or fruit concentrates.

The frozen confection is preferably aerated. As used herein the term "aerated" means that the confection has an overrun of at least 30%. Preferably the frozen confection has an overrun of 30% to 150% or even 50% to 100%. Overrun (with unit "%") is defined by the following equation:

$$overrun = \frac{\text{volume of aerated product - volume of initial mix}}{\text{Volume of initial mix}} \times 100\%$$

Overrun is measured at ambient temperature (20°C) and atmospheric pressure.

Numerical ranges expressed in the format "from x to y" are understood to include x and y, and in specifying any range of values or amounts, any particular upper value or amount can be associated with any particular lower value or amount. Unless otherwise specified, wt% refers to weight percent based on the weight of the entire formulation (including water).

Except in the examples and comparative experiments, or where otherwise explicitly indicated, all numbers are to be understood as modified by the word "about". As used herein, the indefinite article "a" or "an" and its corresponding definite article "the" means at least one, or one or more, unless specified otherwise.

**Examples**

The examples are intended to illustrate the invention and are not intended to limit the invention to those examples *per se*.

*Particle size*

Samples were introduced into a Malvern Mastersizer Hydro 2000S sampling accessory. A refractive index of 1.52 and absorption value of 0.1 was employed for the protein particles and a refractive index of 1.33 for water as the dispersant was used to calculate the particle size of the pea protein samples. To measure the fat droplet size, the sample was prepared by mixing an aliquot of the sample with SDS/Urea in a 1:10 ratio. A refractive index of 1.45 and absorption value of 0.1 was employed for the droplets and a refractive index of 1.33 for water as the dispersant was used to calculate the fat droplet size of the premix samples. Each measurement cycle included a background measurement consisting of 10,000 measurement snaps for 10 s and a sample measurement consisting of the same. Three measurement cycles were conducted for each sample and an average calculated to give a particle size or fat droplet size distribution result. The surface weighted mean [D3,2] was recorded.

*Premix viscosity*

Premix viscosity was measured in 17 mm profiled rheology cups using an Anton Paar Physica MCR501 rheometer. During the measurement, the temperature was maintained at 5°C. A 17 mm profiled bob geometry was immersed in the sample. The sample was equilibrated for 10 minutes. A shear rate sweep was then conducted on the sample using the following measurement profile: shear rate range between 0.001 and 1000 s$^{-1}$ (logarithm spacing), with measurement point duration between 100 and 30 s, and slope of 5 points per decade. The viscosity data for each sample was plotted against the shear rate using a log-log plot. Where a single viscosity is reported for samples, this is the viscosity measured at 50 s$^{-1}$.

**Preparation of ice cream products with low level of protein (less than 4 wt%) and higher levels of fat (more than 3 wt%):**

This example demonstrates that it is possible to create different microstructures from the same formulation by controlling the processing conditions, particularly the points at which pH changes occur. The formulation of the premixes used to prepare Example A, and Examples 1, 2, 3 are shown below in Table 1. The premix formulation of Examples 1, 2 and 3 did not contain any emulsifier. The processing conditions used to prepare these samples are described below.

Table 1: premix formulation

| Ingredient | Amount (wt %) | | | |
|---|---|---|---|---|
| | Example A | Example 1 | Example 2 | Example 3 |
| Soy Protein | 1 | 1 | 1 | 1 |
| Coconut Oil | 8.0 | 8.0 | 5.0 | 2.5 |
| Emulsifier | 0.06 | - | - | - |
| Stabiliser | 0.36 | 0.33 | 0.33 | 0.33 |
| Sucrose | 14.3 | 14.3 | 14.3 | 14.3 |
| Glucose Syrup | 15.15 | 15.15 | 17.7 | 19.95 |
| Water | balance | balance | balance | balance |

*Example A*

The sucrose, glucose syrup, and stabilizer were combined in water with heating (70°C) to provide an aqueous dispersion. The soy protein was added to the dispersion with mixing, followed by addition of the coconut oil and further mixing. The mix was homogenised and pasteurised, and then aged overnight at 4°C. The natural pH of the solution was around 7.0.

*Example 1*

The sucrose, glucose syrup, stabilizer, Soy protein were combined in water with heating (70°C) to provide an aqueous dispersion followed by addition of the coconut oil and further mixing. The mix was homogenised and pasteurised and then the pH of the homogenised premix was adjusted to pH 5.4 using lactic acid, before being aged overnight at 4°C.

*Example 2 & 3*

Examples 2 and 3 are same as example 1, except that the fat amounts are different as mentioned above in Table 1.

*Premix properties*

Physical properties of some of the premix samples were determined, with the results summarized below in Table 2.

Table 2

| Property | Example A | Example 1 | Example B | Example 2 |
|---|---|---|---|---|
| D [3,2] fat droplet size ($\mu$m) | 0.57 | 0.65 | 0.60 | 0.66 |
| Viscosity (Pa.s) | 0.41 | 0.54 | 0.47 | 0.41 |

From the above table it is evident that ice cream remixes produced by using a process of the present invention (Examples 1, 2 and 3) provides ice cream products with higher fat droplet size and higher viscosity. This higher fat droplet and/or higher viscosity leads to better mouthfeel and taste. Incremental value in any one of the parameters between particle size or viscosity leads to higher mouthfeel and better sensorials. Therefore, the ice cream produced by the premix of the present invention are sensorially superior compared to the controls (Example A).

Consumer tasting revealed that the ice cream products produced by the process of the present invention have superior sensorial properties compared to the control.

**Claims**

1. Process for preparing a plant-based frozen confection premix comprising fat, sugars, stabilizer, and plant protein, wherein the premix comprises fat in an amount of greater than 3 wt%, and wherein the process comprises the sequential steps of:

(a) combining sugars, stabilizer and plant protein in water to prepare an aqueous dispersion, wherein the plant protein comprises pulse protein;
(b) optionally adjusting the pH of the aqueous dispersion to ensure that the pH is in the range of 6.5 to 8.5;
(c) combining the aqueous dispersion having a pH in the range of 6.5 to 8.5 with the fat to provide a frozen confection premix, wherein step (c) comprises homogenisation;
(d) reducing the pH of the frozen confection premix to a pH in the range of 3 to 6; and
(e) optionally pasteurising the frozen confection premix of step (d).

2. Process as claimed in claim 1, wherein the pH of the aqueous dispersion is adjusted to a pH in the range of 7 to 8 in step (b).

3. Process as claimed in claim 1 or claim 2, wherein the pH is reduced to a pH in the range of 3.5 to 5.5 in step (d).

4. Process as claimed in any one of claims 1 to 3, wherein the change in pH between that of the aqueous dispersion of step (b) and that of the frozen confection premix of step (d) is expressed by the equation:

$$\Delta pH = pH \text{ of aqueous dispersion} - pH \text{ of frozen confection premix}$$

and $\Delta pH$ is at least 2.

5. Plant-based frozen confection premix comprising:

• fat in an amount of greater than 3 wt%;
• sugars in an amount of 15 to 45 wt%;
• stabilizer in an amount of 0.01 to 1 wt%; and
• plant protein in an amount of 1 to 12 wt%, wherein the plant protein comprises pulse protein;

wherein the premix comprises plant protein particles having a D[3,2] particle size of 6 to 13 $\mu$m.

6. Plant-based frozen confection premix as claimed in claim 5 wherein the plant protein particles having a water holding capacity of 5 to 16 g water per g of protein.

7. Plant-based frozen confection premix as claimed in claim 5 or claim 6 comprising the plant protein in an amount of 1.1 to 8 wt%.

8. Plant-based frozen confection premix as claimed in any one of claims 5 to 7 comprising the comprising the fat in an amount of 4 to 15 wt%.

9. Plant-based frozen confection premix as claimed in any one of claims 5 to 8 wherein the plant-based frozen confection premix does not comprise emulsifier.

10. Plant-based frozen confection premix as claimed any one of claims 5 to 9 obtainable by the process as claimed in any one of claims 1 to 4.

11. Process for preparing a plant-based frozen confection wherein the plant-based frozen confection premix prepared by the process as claimed in any one of claims 1 to 4 is frozen and preferably aerated to provide the plant-based frozen confection.

12. Plant-based frozen confection comprising:

• fat in an amount of greater than 3 wt%;
• sugars in an amount of 15 to 45 wt%;
• stabilizer in an amount of 0.01 to 1 wt%; and
• plant protein in an amount of 1 to 12 wt%, wherein the plant protein comprises pulse protein;

wherein the frozen confection comprises plant protein particles having a D[3,2] particle size of 6 to 13 $\mu$m.

13. Plant-based frozen confection as claimed in claim 12 wherein the plant protein particles having a water holding capacity of 5 to 16 g water per g of protein.

14. Plant-based frozen confection as claimed in claim 12 or claim 13 having an overrun of 30% to 150%

15. Plant-based confection as claimed in any one of claims 12 to 14 obtainable by the process as claimed in claim 11.

| | Europäisches Patentamt European Patent Office Office européen des brevets | **EUROPEAN SEARCH REPORT** | **Application Number** EP 24 20 3949 |

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| E | WO 2024/208752 A1 (UNILEVER IP HOLDINGS B V [NL]; CONOPCO INC DBA UNILEVER [US]) 10 October 2024 (2024-10-10) * claims; examples * ----- | 1-15 | INV. A23G9/32 A23G9/34 A23G9/38 A23G9/42 |
| X | WO 2022/053633 A1 (NESTLE SA [CH]) 17 March 2022 (2022-03-17) * page 6, lines 14-15; claims; examples; table 1 * * page 7, line 2 * * page 5, line 21 * * page 9, lines 18-21 * ----- | 1-15 | |
| X | WO 2022/129520 A1 (DSM IP ASSETS BV [NL]) 23 June 2022 (2022-06-23) * page 8, line 27 - page 9, line 4; claims; table 3 * ----- | 5-15 | |
| X | US 2007/128323 A1 (TSUJII SETSUO [JP] ET AL) 7 June 2007 (2007-06-07) * claims; table 2 * ----- | 1-4 | TECHNICAL FIELDS SEARCHED (IPC) A23G |

The present search report has been drawn up for all claims

| Place of search | Date of completion of the search | Examiner |
|---|---|---|
| The Hague | 5 March 2025 | Bondar, Daniela |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 24 20 3949

This annex lists the patent family members relating to the patent documents cited in the above-mentioned European search report.
The members are as contained in the European Patent Office EDP file on
The European Patent Office is in no way liable for these particulars which are merely given for the purpose of information.

05-03-2025

| Patent document cited in search report | Publication date | Patent family member(s) | Publication date |
|---|---|---|---|
| WO 2024208752 A1 | 10-10-2024 | NONE | |
| WO 2022053633 A1 | 17-03-2022 | AU 2021342338 A1 | 23-03-2023 |
| | | BR 112023004151 A2 | 04-04-2023 |
| | | CA 3192031 A1 | 17-03-2022 |
| | | CL 2023000633 A1 | 29-09-2023 |
| | | CN 116018070 A | 25-04-2023 |
| | | EP 4210497 A1 | 19-07-2023 |
| | | US 2023363408 A1 | 16-11-2023 |
| | | WO 2022053633 A1 | 17-03-2022 |
| WO 2022129520 A1 | 23-06-2022 | CA 3205551 A1 | 23-06-2022 |
| | | EP 4262424 A1 | 25-10-2023 |
| | | US 2024292863 A1 | 05-09-2024 |
| | | WO 2022129520 A1 | 23-06-2022 |
| US 2007128323 A1 | 07-06-2007 | CN 1901808 A | 24-01-2007 |
| | | EP 1728437 A1 | 06-12-2006 |
| | | JP WO2005063039 A1 | 19-07-2007 |
| | | US 2007128323 A1 | 07-06-2007 |
| | | WO 2005063039 A1 | 14-07-2005 |

EPO FORM P0459

For more details about this annex : see Official Journal of the European Patent Office, No. 12/82